# EUROPÄISCHE PATENTSCHRIFT

(11) **EP 1 252 235 B1**
(45) Veröffentlichungstag und Bekanntmachung des Hinweises auf die Patenterteilung: **11.08.2004**
(21) Anmeldenummer: 01909486.1
(22) Anmeldetag: 17.01.2001
(51) Int. Cl.: C08L 95/00, E01C 19/10, C08L 97/02

(54) **VERFAHREN ZUR HERSTELLUNG EINES BITUMINÖSEN MISCHGUTES, PRESSLING ZUR VERFAHRENSGEMÄSSEN VERWENDUNG UND BITUMINÖSES MISCHGUT FÜR STRASSENBELÄGE**
METHOD FOR PRODUCING A BITUMINOUS MIXTURE, COMPACT FOR THE IMPLEMENTATION OF SAID METHOD AND BITUMINOUS MIXTURE FOR ROAD COVERINGS
PROCEDE DE FABRICATION D'UN ENROBE BITUMINEUX, ELEMENT MOULE DESTINE A L'UTILISATION SELON L'INVENTION ET ENROBE BITUMINEUX DESTINE A DES REVETEMENTS ROUTIERS

(30) Priorität: 19.01.2000 DE 10002205
(43) Veröffentlichungstag der Anmeldung: 30.10.2002
(73) Patentinhaber: Sasol Wax GmbH, 20457 Hamburg (DE); Norddeutsche Mischwerke GmbH, 13597 Berlin (DE)
(72) Erfinder: RIEBESEHL, Gerhard, 21039 Escheburg (DE); HILDEBRAND, Günter, 06729 Rehmsdorf (DE)
(74) Vertreter: Kassner, Klaus
(86) Internationale Anmeldenummer: PCT/DE2001/000177
(87) Internationale Veröffentlichungsnummer: WO 2001/053417

(56) Entgegenhaltungen:
- WO-A-96/11980
- WO-A-99/11737
- DE-A- 4 232 112
- US-A- 5 028 266

## Beschreibung

### Technisches Gebiet

Die Erfindung betrifft ein Verfahren zur Herstellung eines bituminösen Mischgutes, insbesondere Asphalt, vorzugsweise Splittmastixasphalt nach den Verfahrensschritten Vormischen der mineralischen Stoffe (Trockenmischen), Naßmischen unter Zugabe des Bindemittels und Nachmischen der Bestandteile des Mischgutes. Die Erfindung betrifft ferner einen Preßling als Zuschlagstoff zur verfahrensgemäßen Verwendung. Schließlich betrifft die Erfindung ein bituminöses Mischgut für Straßenbeläge.

### Stand der Technik

Zur Stabilisierung von bituminösen Mischgütem wie Asphalten ist es bekannt, den Mischungen neben den normengerechten Bestandteilen stabilisierende Füllfasern zuzugeben, die sich in der Mischung homogen verteilen sollen. Um dies zu erreichen, wurden gemäß US-A-2,507,639, DE-A-20 52 720, DE-B-19 36 922 und US-A-4,356,060 vielfältige Lösungen vorgeschlagen. Diesen ist gemeinsam, die Füllfasem in verschiedenen physikalischen Modifikationen bis hin zu granulatförmigen Preßlingen zu binden.

So wird darüber hinaus gemäß der EP-B2-0 313 603 angestrebt, durch die Zugabe der Füllfasem in granulierter Form bereits von Anfang an eine Grobverteilung der Füllfasern in dem fließfähigen Bitumen zu erreichen. Die sich anschließende Feinverteilung soll dann durch das in dem fließfähigen Bitumen sich auflösende Granulat erfolgen.

Um das zu erreichen, soll verfahrensgemäß bei der Herstellung von Bitumenmassen (genannten bituminösen Mischgütern) Bitumen fließfähig gemacht und zum Einmischen der Füllfasern in dieses fließfähige Bitumen ein die Füllfasern umfassendes, sich in dem fließfähigen Bitumen auflösendes und die Füllfasern in dem fließfähigen Bitumen verteilendes Granulat verwendet werden, welches ein Bindemittel aufweist, daß in fließfähigem Bitumen seine Bindewirkung verliert.

Es hat sich jedoch in der Praxis gezeigt, daß diese Lehre nicht zum gewünschten Erfolg führt, weil sich das patentgemäß definierte Granulat innerhalb realer Mischzeiten im flüssigen Bitumen gar nicht auflöst, d.h., daß die vermittelte Lehre den geltenden technischen Vorschriften zur Herstellung von bituminösen Mischgütern, wie Asphalten oder Splittmastixasphalten nicht gerecht wird.

Aus all diesen vorbekannten Lehren schlußfolgernd, hat sich in der Praxis bewährt, sowohl die normengerechte Taktfolge des Vormischens der Mineralien unter Zugabe von erforderlichen Zuschlagstoffen, anschließenden Naßmischens unter Zugabe des Bindemittels wie Bitumen und abschließenden Nachmischens als auch die Zugabe von Zuschlagstoffen wie Preßlinge aus Cellulosefasern in der Vormischzeit zur Herstellung bituminöser Mischgüter einzuhalten.

Es besteht jedoch in hohem Maße das dringende Problem, nicht nur das eigentliche bituminöse Mischgut zu stabilisieren, sondern dieses im eingebauten Zustand als Straßenbelag gegenüber dem rollenden, bremsenden, anfahrenden und stoppenden Verkehr widerstandsfähiger als bisher zu gestalten.

Dazu ist schon die aus der WO 99/11737 und auf die einzelnen Prioritäten entsprechend den DE 197 37 755.6, DE 197 57 553.6, 198 26 144.6 und 198 38 770.9 beruhende, zusammengefaßte Lehre zu entnehmen, wonach Bitumen oder Asphalt bzw. der Straßenbelag einen Anteil von durch Fischer-Tropsch-Synthese gewonnenes Paraffin (FT-Paraffin) aufweist und im Verfahren zur Herstellung derartiger Straßenbeläge - dieses FT-Paraffin zugemischt wird.

Danach scheint das Problem, die technischen Parameter für die Widerstandsfähigkeit des Straßenbelages verbessert zu haben, gelöst zu sein, weil die Wirkung des FT-Paraffins auf Bitumen hinsichtlich der positiven rheologischen Eigenschaften im Mischgut richtig erkannt wurde. Jedoch ist das Problem weder aus logistischer Sicht noch im Hinblick auf die Technologie der Herstellung des bituminösen Mischgutes gelöst, um letztlich einen kostengünstigen Straßenbelag mit den gewünschten widerstandsfähigen Eigenschaften zu erhalten.

Nachgewiesen ist, daß die Zugabe von FT-Paraffinen zu Bitumen vorteilhafte Wirkungen entfaltet. Die Verfahrensweise, die Zugabe durchzuführen, ist gegenwärtig jedoch nachteilig, weil die Bitumen, die zur Herstellung der gewünschten Arten von bituminösen Mischgütem in Mischwerken verarbeitet werden, aus auch externen Bitumenmischanlagen angeliefert werden. In diesen Bitumenmischanlagen ist es nicht erforderlich, für jeden Anwendungsfall ein mit FT-Paraffin versetztes Bitumen bereitzuhalten. Demzufolge sind die Mischwerke zur Herstellung der bituminösen Mischgüter für den Straßenbau gezwungen, mit hohem Geräte- und Personalaufwand Vorratskapazitäten für nicht mit FT-Paraffin und mit FT-Paraffin versetztem Bitumen, vorzuhalten. Hinzu kommt, daß das homogene Einmischen von FT-Paraffin in Bitumen unverhältnismäßig zeitaufwendig ist, was auch in keinem Verhältnis zu den relativ kurzen Mischzeiten des Mischgutes für einen rationellen Straßenbau steht.

### Darstellung der Erfindung

Die Erfindung soll das Problem lösen, die Logistik der Einbringung des FT-Paraffins in das Bitumen und letztlich in den Straßenbelag zu verbessern und eine rationelle Herstellungstechnologie für das bituminöse Mischgut wie Asphalt vorzugeben, ohne daß zusätzliche Investitionen gegenüber herkömmlichen Mischwerken erforderlich werden.

Dazu stellt sich die Erfindung die Aufgabe, ein Verfahren zur Herstellung eines bituminösen Mischgutes, insbesondere Asphalt, vorzugsweise Splittmastixasphalt für Straßenbeläge, umfassend die normengerechten Verfahrensschritte, wie Vormischen von Mineralien, anschließendes Naßmischen unter Zugabe des Bindemittels Bitumen sowie abschließendes Nachmischen zu entwickeln, wobei trotz Zugabe des FT-Paraffins in diesen Verfahrensablauf die logistischen und technologischen Voraussetzungen für ein kostengünstig hergestelltes Mischgut sowie die Voraussetzungen für ein rationell einzubauendes Mischgut als Straßenbelag mit verbesserten rheologischen Eigenschaften zu schaffen sind. Darin eingebunden ist die Aufgabe, als Trägersubstanz für das FT-Paraffin Cellulosefasern zu verwenden, so daß die Zugabe von Cellulosefasern und FT-Paraffin in einem Verfahrensschritt erfolgen kann.

Erfindungsgemäß wird die Aufgabe nach dem Verfahren dadurch gelöst, daß
a) in der Vormischzeit Preßlinge mit mindestens Anteilen von Cellulosefasern und FT-Paraffin den Mineralien zugegeben werden,
b) in der Vormischzeit die Preßlinge durch die mechanische, zerkleinernde Wirkung der Mineralien aufgerieben und dabei die Cellulosefasern mit dem FT-Paraffin in der Mineralmischung weitgehend verteilt werden,
c) im Ergebnis der Nachmischzeit
   - das von den genormten Bitumensorten ausgewählte Ausgangs-Bitumen im Mischgut eine Reduzierung der Nadelpenetration von mindestens zwei genormten Bitumensorten erfährt und das Tieftemperaturverhalten, gemessen am Brechpunkt nach Fraaß praktisch unverändert bleibt,
   - die Zugfestigkeit als Maß der Tieftemperaturstabilität des Bitumen im Mischgut, bei -20°C in Anlehnung an SHRP mit der Zugmaschine Zwicki 1120, um einen Wert von ≥ 400 Kpa verbessert wird,
   - der Penetrationsindex des Bitumens im Mischgut im Bereich von -0,8 bis + 6,1 erhöht und nachhaltig die Plastizitätsspannne aufgeweitet werden, wobei die so geschaffenen Voraussetzungen für die zu verbessernden rheologischen Eigenschaften des Bitumens im Mischgut die Widerstandsfähigkeit gegenüber plastischen Verformungen wie Spurrinnen im eingebauten Zustand des Mischgutes erhöhen und den Verdichtungswiderstand bei der Verlegung des Mischgutes und Herstellung des Straßenbelages senken, und
d) die Vor-, Naß- und Nachmischzeit je ca. 15s betragen bzw. die Gesamtmischzeit erheblich gesenkt wird und die Mischtemperatur je nach Bitumensorte zwischen 140° C und 160° C liegt.

Das Verfahren wird entsprechend den kennzeichnenden Merkmalen der Ansprüche 2 bis 9 weiter ausgebildet.

Im Sinne der Aufgabenstellung besteht der Preßling erfindungsgemäß aus
a) ausgewählten Cellulosefasern oder sonstigen organischen Rohfasern, wie Papier-, Jute-, Hanf-, Sisal-, Flachs-, Textil- und/oder Holzfasern,
b) FT-Paraffin, welches den besagten Fasern anhaftet und mit diesen den Preßling durchsetzt und
c) diese Bestandteile zu sogenannten Pellets verpreßt sind, wobei
d) eine Masse von Pellets ein aus formstabilen Teilen bestehendes Schüttgut bildet, welches in der Vormischzeit der Mineralmischung zugegeben wird.

Der Preßling und somit die Masse von Pellets sind im Hinblick auf das zu erzielende Mischgut gemäß den Merkmalen der Ansprüche 11 bis 14 näher definiert.

In Vollendung der Lösung der erfindungsgemäßen Aufgabe wird nun ein bituminöses Mischgut nach den Merkmalen des Anspruches 15 unter Verwendung einer Masse von Pellets geschaffen, welches einen homogen vermischten Anteil von FT-Paraffin im Bitumen aufweist, wobei das Ausgangs-Bitumen im Mischgut und schlüssig zum Herstellungsverfahren desselben
a) eine Reduzierung der Nadelpenetration von ≥ 25/10 mm aufweist,
b) hinsichtlich der Tieftemperaturzugfestigkeit um den Wert > 400 Kpa gestiegen ist,
c) bezüglich des Erweichungspunktes um ≥ 25°C zugenommen hat, so daß mindestens bei mehreren auszuwählenden Bitumensorten von Normenbitumen, wie B45, B65 oder B80 die Werte von Oxidationsbitumen vorliegen, wobei
d) einerseits die Widerstandsfähigkeit des als Straßenbelag eingebauten Mischgutes gegenüber Verformungen wie Spurrinnen zugenommen und der Verdichtungswiderstand beim einzubringenden Mischgut abgenommen hat und
e) andererseits die Temperatur des einzubringenden Mischgutes um 15°C - 20°C reduziert ist.

In der Gesamtheit des gelösten logistischen und technologischen Problems werden dadurch bei Einhaltung der genormten Verfahrensabfolgen von der Herstellung des Mischgutes bis zur Verlegung desselben als Straßenbelag mit überraschendem Effekt die Technologien rationeller und damit kostengünstiger realisiert und zugleich die bituminösen Straßendecken durch sinnvolle Einbindung des FT-Paraffins widerstandsfähig gestaltet.

Dieser Gesamterfolg zeigt vorteilhafte Einzeleffekte. So ermöglicht die Erfindung, das FT-Paraffin praktisch wie als herkömmlichen Zuschlagstoff einfach zusammen mit den Cellulosefasern in Form eines aus Pellets bestehenden Schüttgutes während der Vormischzeit dem Mineralgemisch zuzugeben, womit das erforderliche Mischungsverhältnis von FT-Paraffin im Bitumen des Mischgutes ohne weitere Kontrolle vorbestimmt ist. Des weiteren kann das Bitumen wie bisher vorgehalten werden. Darüber hinaus ermöglicht der erfindungsgemäße Preßling in Form der Pellets als Schüttgut, daß eine einfache, der Vorratshaltung und Dosierung der bisherigen Zuschlagstoffe entsprechende Logistik beibehalten werden kann, weil keine verfahrensmäßige Vorbehandlung wie eine Verflüssigung durch Aufwärmung des FT-Paraffins und/oder Einmischung desselben in das Bitumen erforderlich wird.

Schließlich ermöglicht erst die Einheit des erfindungsgemäßen Verfahrens, Preßlings und Mischgutes, daß dies für das Bitumen im Mischgut vorteilhafte FT-Paraffin von der Herstellung des Mischgutes bis zum mit geringerem Verdichtungswiderstand einbaubaren Mischgut als Straßenbelag den Komplex der rheologischen Eigenschaften voll entfalten kann und dabei rationellere Technologien zur Anwendung kommen können.

Die Erfindung wird entsprechend dem Verfahren, Preßling und Straßenbelag an Ausfährungsbeispielen näher erläutert.

### Kurze Beschreibung der Zeichnungen

In den Zeichnungen zeigen
- Fig. 1: die schematische Darstellung eines Preßlings,
a) in der Vorderansicht und
b) den Schnitt II-II nach a),
- Fig. 2: die schematische Darstellung von Spurrinnen-Tests,
a) ohne FT-Paraffin und
b) mit FT-Paraffin,
- Fig. 3: Tabellen von Kenndaten eines Normenbitumens in einem verfahrensgemäß
a) bis e) hergestellten und als Straßenbelag eingebauten bituminösen Mischgut.

### Bester Weg zur Ausführung der Erfindung

In einem nicht dargestellten Mischwerk mit einer herkömmlichen Anlage zur Herstellung eines Splitmastixasphaltes für Straßenbeläge werden die üblichen Mineralien wie Gesteine in den erforderlichen Korngrößen, das flüssige Bitumen sowie der Zuschlagstoff als eine Menge von aus Preßlingen hergestellten Pellets, die mindestens Anteile von Cellulosefasern und FT-Paraffin enthalten, vorgehalten.

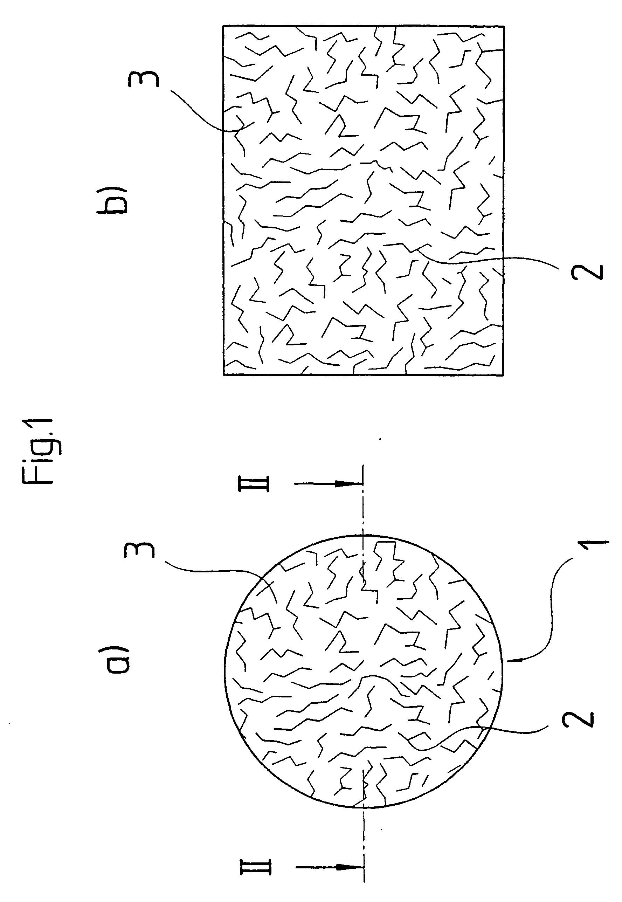

Es ist davon auszugehen, daß der erforderliche Splittmastixasphalt in der genormten Verfahrensschrittfolge
- Vormischen der Mineralien entsprechend den erforderlichen Korngrößen unter Zugabe der Zuschlagstoffe,
- anschließendes Naßmischen unter Zugabe des flüssigen Bitumens und
- abschließendes Nachmischen
innerhalb der vorgegebenen Mischzeiten herzustellen ist. In diesem Fall wird für den benötigten Splittmastixasphalt ein genormtes Bitumen B80 gewählt. In der bzw. mit Beginn der Vormischzeit werden den Mineralien Preßlinge 1 gemäß Fig. 1 a), b) in einer Masse von Pellets als Schüttgut zugegeben.

Hierbei können folgende Relationen zugrundegelegt werden:
Für zu erreichende Bitumengehalte von 6,5 - 7,5 Gewichtsprozent für Splittmastixasphalt (SMA) müßten rechnerisch bei Zugabe von 3 % FT-Paraffin des Gesamtbitumens im Minimum 1,95 kg und im Maximum 2,25 kg FT-Paraffin 3 (handelsübliches SASOBIT®) je 1000 kg SMA eingesetzt werden. Die Mischgutzusammensetzung der Preßlinge 1 zum SMA sollte 7,0 Gewichtsprozent betragen, d.h., daß auf 1000 kg SMA Preßlinge 1 als Schüttgut von Pellets kommen, die 2,1 kg FT-Paraffin 3 (SASOBIT®) und 3,0 kg Cellulosefasern 2 aufweisen. Aus Wirtschaftlichkeitsgründen ist es sinnvoll, den Maximalzusatz von FT-Paraffin 3 (SASOBIT®) im Preßling 1 auf 2,8 kg zu 3,0 kg Cellulosefasern 2 zu begrenzen.

Der erfindungsgemäße Preßling 1 wird im Extrusionsverfahren aus Cellulosefasern 2 und aufgeschmolzenem FT-Paraffin 3 (SASOBIT®) extern hergestellt und als Schüttgut von Pellets wie handelsübliche Zuschlagstoffe bisheriger Pellets zum Mischwerk angeliefert.

In dem jeweiligen Preßling 1 haftet das FT-Paraffin 3 (SASOBIT®) den Cellulosefasern 2, wie Papier-. Jute-, Hanf-, Sisal-, Flachs-, Textil und/oder Holzfasern an und durchsetzt mit diesen den Preßling 1. Dieser wird in dem erwähnten Extrusionsverfahren zunächst als Extrusionsstrang erzeugt und dann in einzelne Pellets geteilt, wobei deren Durchmesser und Länge möglichst gleich (ca. 5 mm) sind.

Im Pellet ist das FT-Paraffin 3 (SASOBIT®) bezogen auf die Cellulosefasern 2 in einem Gewichtsverhältnis von 1 : 1 bis 1 : 1,5 enthalten. Die Cellulosefasern 2 können eine Länge von 3000µ bis feinst aufweisen, wobei eine mittlere Länge von 500µ anzustreben ist.

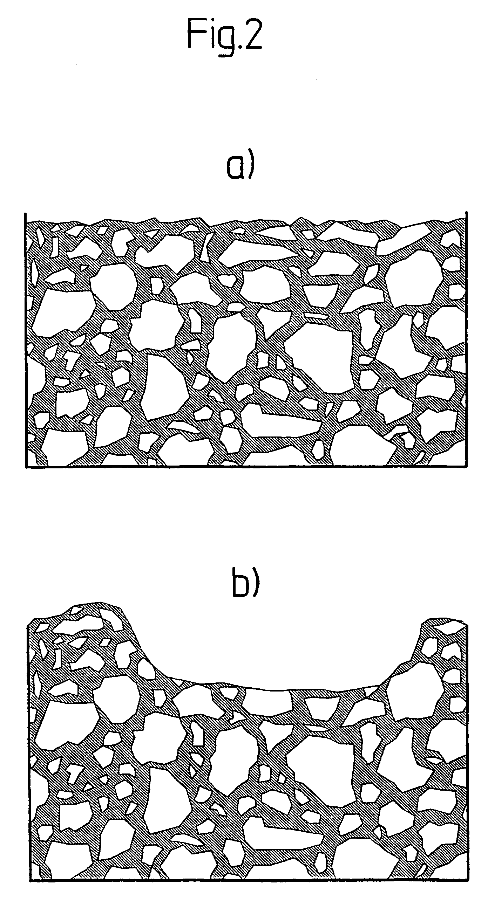

In einer Vormischzeit von ca. 15s werden die Preßlinge 1 durch die mechanische, zerkleinernde Wirkung der Gesteine aufgerieben bzw. zerkleinert und dabei die Cellulosefasern 1 mit dem daran haftenden FT-Paraffin 3 (SASOBIT®) in der Mineralmischung weitgehend verteilt. In der anschließenden Naßmischzeit von ca. 15s unter gleichzeitiger Zugabe von Bitumen sind sowohl die Cellulosefasern 1 als auch das FT-Paraffin 3 (SASOBIT®) im Bitumen homogen verteilt, so daß im Ergebnis der Nachmischzeit von ca. 15s
- das Bitumen B80 durch die Einwirkung des FT-Paraffin 3 (SASOBIT®) im nun gemischten SMA eine Reduzierung der Nadelpenetration von 71/10 mm auf 43/10 mm, d.h. eine Reduzierung von 28/10 mm erfährt, was zwei Bitumensorten, d.h. einem B45 (DIN 1995) entspricht, da die Penetration von B45 35-50/10 mm beträgt, und das Tieftemperaturverhalten gemessen am Brechpunkt nach Fraaß praktisch unverändert bleibt,
- die Zugfestigkeit als Maß der Tieftemperaturstabilität des Bitumens B80 im SMA bei -20°C in Anlehnung an SHRP mit der Zugmaschine Zwicki um einen Wert von ≥ 400 Kpa verbessert wird,
- der Penetrationsindex des Bitumens B80 im SMA erhöht und nachhaltig die Plastizitätsspanne aufgeweitet werden, wobei
die so geschaffenen Voraussetzungen für die zu verbessernden rheologischen Eigenschaften des Bitumens B80 im SMA die Widerstandsfähigkeit gegenüber plastischen Verformungen wie Spurrinnen im eingebauten Zustand des SMA erhöhen (Fig. 2 a), b)). Bei dem gewählten Bitumen B80 liegt die Temperatur für die Herstellung des SMA bei 160° C.

Der so schon rationell hergestellte SMA wird nun als obere Deckschicht des Straßenbelages mit einer um 15°C bis 20°C reduzierten Temperatur eingebaut. In diesem eingebauten Zustand weist der SMA eine verringerte Nadelpenetration auf, so daß bei dem Ausgangs-Bitumen B80 die Eigenschaft eines B45 vorliegt. Dabei hat der Erweichungspunkt zugenommen, womit die Eigenschaft eines Oxidationsbitumens gesichert ist. Dieser SMA-Straßenbelag wird mit geringem Verdichtungswiderstand eingebaut und weist schließlich eine hohe Widerstandsfähigkeit gegenüber Verformungen wie Spurrinnen (Fig. 2 a), b)) auf.

Entscheidend für die Entfaltung der Wirkung von FT-Paraffin im Sinne der eingangs behandelten Aufgabenstellung, d.h. ohne die Nachteile der vorbekannten Lösung gemäß der WO 99/11737 hinnehmen zu müssen, ist der überraschende Schritt, daß das FT-Paraffin mit einer Trägersubstanz, den Cellulosefasern, verpreßt als ein Schüttgut von Pellets schon dem Mineralgemisch in der Vormischzeit zugegeben und in dieser Zeit mindestens vorzerkleinert und weitgehend homogen in der Trockenmischung verteilt wird.

### Gewerbliche Anwendbarkeit

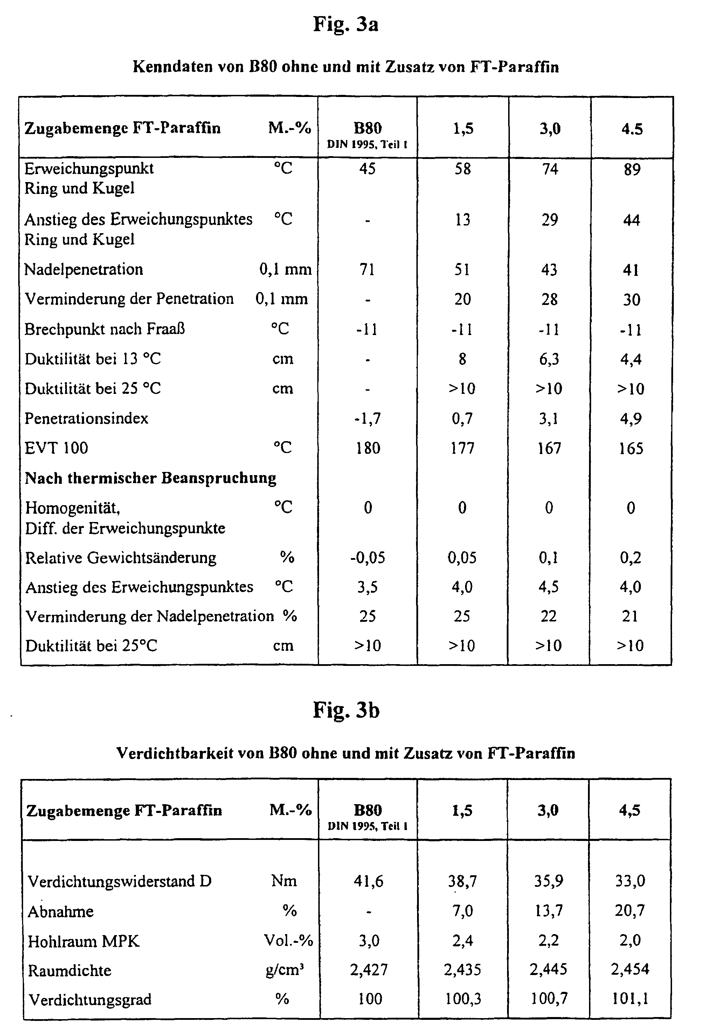

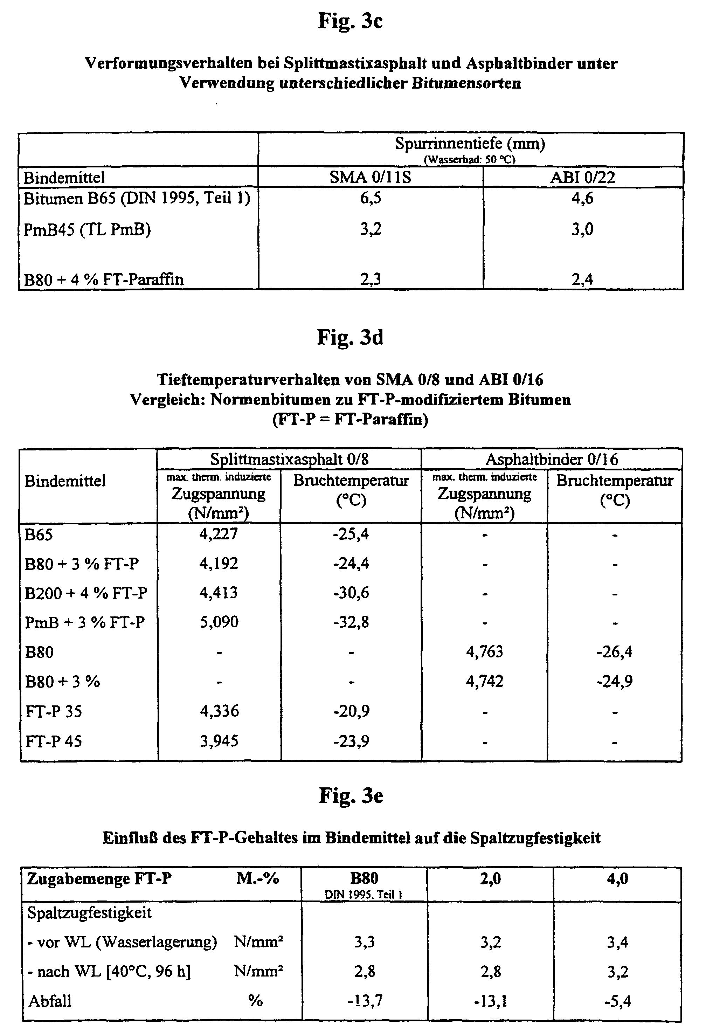

Die Erfindung wurde in Versuchsreihen erprobt, so daß für das beschriebene Ausführungsbeispiel die Parameter gemäß den Tabellen in Fig. 3 a) bis e) für eine gewerbliche Anwendbarkeit bestätigt werden können.

### Bezugszeichenliste

- 1 =: Preßling
- 2 =: Cellulosefaser
- 3 =: FT-Paraffin

## Patentansprüche

1. Verfahren zur Herstellung eines bituminösen Mischgutes, insbesondere Asphalt, vorzugsweise Splittmastixasphalt für Straßenbeläge mit den Verfahrensschritten
- Vormischen von Mineralien unter Zugabe von Zuschlagstoffen,
- anschließendes Naßmischen unter Zugabe des Bindemittels wie Bitumen und
- abschließendes Nachmischen, wobei die Zuschlagstoffe mindestens eine als Trägersubstanz für Fischer-Tropsch-Paraffin (FT-Paraffin) ausgestaltete Cellulosefasern sind, **dadurch gekennzeichnet, daß**
a) in der Vormischzeit Preßlinge (1) mit mindestens Anteilen aus Cellulosefasern (2) und FT-Paraffin (3) den Mineralien zugegeben werden,
b) in der Vormischzeit die Preßlinge (1) durch die mechanische, zerkleinernde Wirkung der Mineralien aufgerieben und dabei die Cellulosefasern (2) mit dem FT-Paraffin (3) schon in der Mineralmischung weitgehend verteilt werden, wonach in der folgenden Naßmischzeit die homogene Verteilung im Bitumen gesichert ist,
c) im Ergebnis der Nachmischzeit
- das von den genormten Bitumensorten ausgewählte Ausgangs-Bitumen im Mischgut eine Reduzierung der Nadelpenetration von mindestens zwei genormten Bitumensorten erfährt und das Tieftemperaturverhalten praktisch unverändert bleibt,
- die Zugfestigkeit als Maß der Tieftemperaturstabilität des Bitumens im Mischgut um einen Wert von ≥ 400 Kpa verbessert wird,
- der Penetrationsindex des Bitumens im Mischgut im Bereich von -0,8 bis + 6,1 erhöht und nachhaltig die Plastizitätsspanne aufgeweitet werden, wobei die so geschaffenen Voraussetzungen für die zu verbessernden rheologischen Eigenschaften des Bitumens im Mischgut die Widerstandsfähigkeit gegenüber plastischen Verformungen wie Spurrinnen im eingebauten Zustand des Mischgutes erhöhen und
d) die Vor-, Naß- und Nachmischzeit je ca. 15s betragen und die Mischtemperatur je nach Bitumensorte zwischen 140°C und 160°C liegt.

2. Verfahren nach Anspruch 1, **dadurch gekennzeichnet, daß** der Erweichungspunkt des gewählten Bitumens im Mischgut (Ring und Kugel nach DIN 1995) um den Wert ≥ 25°C ansteigt und mindestens bei den Bitumensorten B45, B65 oder B80 Erweichungspunkte von Oxidationsbitumen erreicht werden.

3. Verfahren nach Anspruch 1 oder 2, **gekennzeichnet durch** die Verwendung von Preßlingen (1) als Zuschlagstoff, die neben einem Hauptanteil von Cellulosefasern (2) einen Anteil von Fischer-Tropsch-Paraffin (FT-Paraffin) (3) enthalten, welcher Anteil mit den die Trägersubstanz bildenden Cellulosefasern (2) im Preßling (1) durchsetzt ist.

4. Verfahren nach einem der Ansprüche 1 bis 3, **dadurch gekennzeichnet, daß** bezogen auf 1000 kg Mischgut in dem Zuschlagstoff wie Preßlinge (1) 2 kg bis 3 kg FT-Paraffin (3) und 3 kg Cellulosefasern (2) enthalten sind.

5. Verfahren nach einem der Ansprüche 1 bis 4, **dadurch gekennzeichnet, daß** bezogen auf 1000 kg Mischgut in dem Zuschlagstoff minimal 2,1 kg FT-Paraffin (3) und 3 kg Cellulosefasern (2) enthalten sind.

6. Verfahren nach einem der Ansprüche 1 bis 5, **dadurch gekennzeichnet, daß** bezogen auf 1000 kg Mischgut in dem Zuschlagstoff maximal 2,8 kg FT-Paraffin (3) und 3 kg Cellulosefasern (2) enthalten sind.

7. Verfahren nach einem der Ansprüche 1 bis 6, **dadurch gekennzeichnet, daß** die Cellulosefasern (2) eine Länge von 3000µ bis feinst aufweisen.

8. Verfahren nach einem der Ansprüche 1 bis 7, **dadurch gekennzeichnet, daß** die Cellulosefasern (2) eine mittlere Länge von 500µ aufweisen.

9. Verfahren nach einem der Anspruche 1 bis 8, **dadurch gekennzeichnet, daß** die Zuschlagstoffe wie Preßlinge (1) Teile von Extrusionskörpern sind.

10. Preßling zur verfahrensgemäßen Verwendung nach Anspruch 1 mit
a) ausgewählten Cellulosefasern (2) oder sonstigen organischen Rohfasern, wie Papier-, Jute-, Hanf-, Sisal-, Flachs-, Textil- und/oder Holzfasern,
b) FT-Paraffin (3), welches den besagten Fasern anhaftet und mit diesen den Preßling durchsetzt und
c) diese Bestandteile zu sogenannten Pellets verpreßt sind, wobei
d) eine Masse von Pellets ein aus formstabilen Teilen bestehendes Schüttgut bildet, welches in der Vormischzeit der Mineralmischung zugegeben wird.

11. Preßling nach Anspruch 10, **dadurch gekennzeichnet, daß** in dem Preßling (1) oder in einer Masse von Pellets FT-Paraffin (3) bezogen auf Cellulosefasern (2) in einem Masseverhältnis von 1 zu 1 bis 1 zu 1,5 enthalten ist.

12. Preßling nach einem der Ansprüche 10 oder 11, **dadurch gekennzeichnet, daß** die Cellulosefasern (2) eine Länge von 3000µ bis feinst aufweisen.

13. Preßling nach einem der Ansprüche 10 bis 12, **dadurch gekennzeichnet, daß** die Cellulosefasern (2) eine mittlere Länge von 500µ aufweisen.

14. Preßling nach einem der Ansprüche 10 bis 13, **dadurch gekennzeichnet, daß** die durch den Preßling (1) gebildeten Pellets Teile von Extrusionskörpern sind.

15. Bituminöses Mischgut für Straßenbeläge nach Anspruch 1 unter Verwendung einer Masse von Pellets nach Anspruch 10, **gekennzeichnet durch** einen homogen vermischten Anteil von FT-Paraffin im Bitumen, wobei das Ausgangs-Bitumen im Mischgut
a) eine Reduzierung der Nadelpenetration von ≥ 25/10 mm aufweist,
b) hinsichtlich der Tieftemperatur-Zugfestigkeit um den Wert > 400 Kpa gestiegen ist,
c) bezüglich des Erweichungspunktes um den Wert ≥ 25°C zugenommen hat, so daß bei mehreren auszuwählenden Bitumensorten von Normenbitumen die Werte von Oxidationsbitumen vorliegen, wobei
d) einerseits die Widerstandsfähigkeit des als Straßenbelag eingebauten Mischgutes gegenüber Verformungen wie Spurrinnen in Abhängigkeit von der Reduzierung des Verdichtungswiderstandes bei der Verlegung des Mischgutes und Herstellung des Straßenbelages zugenommen hat und
e) andererseits die Temperatur des einzubringenden Mischgutes um 15°C - 20°C reduziert ist.

## Claims

1. A process for manufacturing a bitumous mixture, in particular asphalt, preferably mastic asphalt, for road toppings, comprising the following steps:
- premixing of minerals while adding aggregates,
- subsequent wet-mixing while adding a binding agent such as bitumen, and
- final remixing, whereby the aggregates are at least cellulose fibres adapted to be used as a carrier substance for Fischer-Tropsch paraffin (FT paraffin), **characterised in that**
a) during the premixing period, briquettes (1) containing at least portions of cellulose fibres (2) and FT paraffin (3) are added to the minerals,
b) during the premixing period, the briquettes (1) are broken up due to the mechanical, comminuting effect of the minerals while the cellulose fibres (2) and the FT paraffin (3) are already distributed to a large extent in the mineral mixture, whereupon the homogenous distribution in the bitumen is ensured during the subsequent wet-mixing period,
c) the remixing period results in
- the starting bitumen selected from the standard types of bitumen in the mixture experiencing a reduction in needle penetration of at least two standard types of bitumen and the low-temperature-behaviour remaining practically unchanged,
- the tensile strength as a measure of the low-temperature stability of the bitumen in the mixture being improved by a value of ≥ 400 Kpa,
- the penetration index of the bitumen in the mixture being increased within the range of -0.8 to +6.1 and the plasticity span being lastingly widened, whereby the preconditions thus created for improving the bitumen's rheological characteristics increase the resistance again plastic deformations such as grooves in the applied state of the mixture, and
d) the premixing, wet-mixing and remixing periods are each approx. 15s and the mixing temperature lies between 140 °C and 160 °C depending upon the type of bitumen.

2. Process according to claim 1, **characterised in that** the deformation point of the chosen bitumen in the mixture (ring and ball method to DIN 1995) rises by a value of ≥ 25 °C, and deformation points of oxidation bitumen are achieved for at least bitumen types B45, B65 or B80.

3. Process according to claim 1, **characterised by** the use of briquettes (1) as aggregate, which briquettes contain, apart from cellulose fibres (2) as the main portion, a portion of Fischer-Tropsch paraffin (FT paraffin) (3), which portion is interspersed with the cellulose fibres (2) forming the carrier-substance in the briquette (1).

4. Process according to claims 1 to 3, **characterised in that** an amount of 2 kg to 3 kg of FT paraffin (3) and 3 kg of cellulose fibres (2) is contained in the aggregate such as briquettes (1) for an amount of 1000 kg of bitumous mixture.

5. Process according to claims 1 to 4, **characterised in that** a minimum amount of 2.1 kg of FT paraffin (3) and 3 kg of cellulose fibres (2) is contained in the aggregate for an amount of 1000 kg of bitumous mixture.

6. Process according to claims 1 to 5, **characterised in that** a maximum amount of 2.8 kg of FT paraffin (3) and 3 kg of cellulose fibres (2) is contained in the aggregate for an amount of 1000 kg of bitumous mixture.

7. Process according to claims 1 to 6, **characterised in that** the cellulose fibres (2) have a length of 3000µ up to finest.

8. Process according to claims 1 to 7, **characterised in that** the cellulose fibres (2) have a mean length of 500µ.

9. Process according to claims 1 to 8, **characterised in that** the aggregates such as briquettes (1) consist of parts of extrusion bodies.

10. A briquette for use in the process according to claim 1 comprising
a) selected cellulose fibres (2) or other organic raw fibres such as paper, jute, hemp, sisal, flax, textile and/or wood fibres,
b) FT paraffin (3) which adheres to the above fibres and together with these fibres is interspersed in the briquette, and
c) these ingredients being pressed to form so-called pellets, whereby
d) a mass of pellets forms a bulk material consisting of dimensionally stable parts, which is added to the mineral mix during the premixing period.

11. Briquette according to claim 10, **characterised in that**, in relation to cellulose fibres (2), FT paraffin (3) is contained in the briquette (1) or in a mass of pellets at a mass ratio between 1 to 1 and 1 to 1.5.

12. Briquette according to one of claims 10 or 11, **characterised in that** the cellulose fibres (2) have a length of 3000µ up to finest.

13. Briquette according to one of claims 10 to 12, **characterised in that** the cellulose fibres (2) have a mean length of 500µ.

14. Briquette according to one of claims 10 to 13, **characterised in that** the pellets formed from the briquette (1) consist of parts of extrusion bodies.

15. Bitumous mixture for road toppings according to claim 1 using a mass of pellets according to claim 10, **characterised by** a homogenously mixed portion of FT paraffin in the bitumen, whereby the starting bitumen in the mixture
a) has a needle penetration which is reduced by ≥ 25/10 mm,
b) has a low-temperature tensile strength which has risen by a value of > 400 Kpa,
c) has a deformation point, which has risen by a value of ≥ 25 °C, so that the values of oxidation bitumen are present for several standard bitumen types to be selected, whereby
d) on the one hand, the resistance against deformations such as grooves, of the mixture when applied as road topping, has increased depending upon the reduction in the mixture's compacting resistance during its application and the forming of the road topping, and
e) on the other hand, the temperature of the mixture to be applied is reduced by 15 °C to 20 °C.

## Revendications

1. Procédé de fabrication d'un mélange bitumineux, notamment d'asphalte, de préférence d'asphalte de mastic désintégré, pour revêtements routiers, comprenant les étapes opératoires suivantes :
- prémélange de minéraux en ajoutant des adjuvants,
- mélange à l'état humide consécutif en ajoutant le liant, comme du bitume et
- remélange final, les adjuvants étant au moins des fibres de cellulose constituant une substance support pour de la paraffine Fischer-Tropsch (paraffine FT), **caractérisé en ce que**
a) on rajoute aux minéraux pendant la période de prémélange des comprimés (1) contenant au moins des proportions de fibres de cellulose (2) et de la paraffine FT (3),
b) pendant la période de prémélange (1), les comprimés sont râpés par l'effet mécanique de broyage des minéraux et les fibres de cellulose (2) avec la paraffine FT (3) sont alors déjà largement réparties dans le mélange de minéraux, ce qui assure, pendant la durée de remélange consécutive, la répartition homogène dans le bitume,
c) en résultat de la période de prémélange
- le bitume initial sélectionné parmi les variétés de bitume normalisées subit dans le mélange une réduction de la pénétrabilité à l'aiguille d'au moins deux variétés de bitume normalisées et le comportement à basse température reste pratiquement inchangé,
- la résistance à la traction en tant qu'indice de stabilité à basse température du bitume dans le mélange est améliorée à raison d'une valeur ≥ 400 Kps,
- l'indice de pénétration du bitume dans le mélange augmente dans la plage de - 0,8 à + 6,1 et la fourchette de plasticité augmente durablement, les conditions préalables ainsi créées pour les propriétés rhéologiques à améliorer du bitume dans le mélange augmentant la capacité de résistance vis-à-vis de déformations plastiques comme des rainures de trace à l'état construit du mélange et
d) la durée de prémélange, de mélange à l'état humide et de remélange étant chacune d'environ 15 s. et la température de mélange allant de 140° C à 160 °C en fonction de la variété de bitume.

2. Procédé selon la revendication 1, **caractérisé en ce que** le point de ramollissement du bitume choisi dans le mélange (anneau et bille selon DIN 1995) augmente d'une valeur ≥ 25° C et qu'au moins pour les variétés de bitume B45, B65 ou B80, on obtient les points de ramollissement des bitumes à oxydation.

3. Procédé selon la revendication 1 ou 2, **caractérisé par** l'utilisation comme adjuvant de comprimés (1) qui, outre une proportion principale de fibres de cellulose (2), contiennent une proportion de paraffine Fischer-Tropsch (paraffine FT) (3), laquelle proportion se mêle aux fibres de cellulose (2) formant la substance support dans le comprimé (1).

4. Procédé selon l'une quelconque des revendications 1 à 3, **caractérisé en ce qu'**en se basant sur 1000 kg de mélange, dans l'adjuvant tel que les comprimés (1), sont contenus 2 kg à 3 kg de paraffine FT (3) et 3 kg de fibres de cellulose (2).

5. Procédé selon l'une quelconque des revendications 1 à 4, **caractérisé en ce qu'**en se basant sur 1000 kg de mélange, dans l'adjuvant sont contenus au minimum 2,1 kg de paraffine FT (3) et 3 kg de fibres de cellulose (2).

6. Procédé selon l'une quelconque des revendications 1 à 5, **caractérisé en ce qu'**en se basant sur 1000 kg de mélange, dans l'adjuvant sont contenus au maximum 2,8 kg de paraffine FT (3) et 3 kg de fibres de cellulose (2).

7. Procédé selon l'une quelconque des revendications 1 à 6, **caractérisé en ce que** les fibres de cellulose (2) présentent une longueur allant de 3000 µ jusqu'à une finesse extrême.

8. Procédé selon l'une quelconque des revendications 1 à 7, **caractérisé en ce que** les fibres de cellulose (2) présentent une longueur moyenne de 500 µ.

9. Procédé selon l'une quelconque des revendications 1 à 8, **caractérisé en ce que** les adjuvants comme les comprimés (1) sont des morceaux de corps extrudés.

10. Comprimé pour usage conforme au procédé selon la revendication 1 contenant
a) des fibres de cellulose sélectionnées (2) ou autres fibres organiques brutes, comme des fibres de papier, de jute, de chanvre, de sisal, de lin, de textile et/ou de bois,
b) de la paraffine FT (3) qui adhère aux fibres indiquées et se mêle au comprimé avec celles-ci et
c) ces composantes étant compressées pour former ce qu'on appelle des boulettes,
d) une masse de boulettes formant un produit en vrac consistant en morceaux de forme stable, qui est ajouté pendant la période de prémélange au mélange de minéraux.

11. Comprimé selon la revendication 10, **caractérisé en ce que**, dans le comprimé (1) ou dans une masse de boulettes, de la paraffine FT (3) est contenue, par rapport aux fibres de cellulose (2), dans un ratio de masse situé entre 1 à 1 et 1 à 1,5.

12. Comprimé selon l'une quelconque des revendications 10 ou 11, **caractérisé en ce que** les fibres de cellulose (2) présentent une longueur allant de 3000 µ jusqu'à une finesse extrême.

13. Comprimé selon l'une quelconque des revendications 10 à 12, **caractérisé en ce que** les fibres de cellulose (2) présentent une longueur moyenne de 500 µ.

14. Comprimé selon l'une quelconque des revendications 10 à 13, **caractérisé en ce que** les boulettes formées par le comprimé (1) sont des morceaux de corps extrudés.

15. Mélange bitumineux pour revêtements routiers selon la revendication 1, en utilisant une masse de boulettes selon la revendication 10, **caractérisé par** une proportion mélangée de manière homogène de paraffine FT dans le bitume, le bitume initial du mélange
a) présentant une réduction de la pénétrabilité à l'aiguille ≥ 25/10 mm,
b) ayant augmenté au niveau de la résistance à la traction à basse température d'une valeur ≥ 400 Kps,
c) ayant augmenté au niveau du point de ramollissement d'une valeur ≥ 25° C de sorte, qu'au cas où plusieurs variétés de bitume sont sélectionnées parmi des bitumes normalisés, on obtient les valeurs des bitumes à oxydation,
d) d'une part, la capacité de résistance du mélange construit sous forme de revêtement routier ayant augmenté vis-à-vis de déformations comme les rainures de traces en fonction de la réduction de la résistance au compactage lors de la pose du mélange et de la fabrication du revêtement routier et
e) d'autre part, la température du mélange à introduire étant réduite à raison de 15° C à 20° C.
